# EUROPÄISCHE PATENTANMELDUNG

(11) **EP 2 081 129 A2**
(43) Veröffentlichungstag der Anmeldung: **22.07.2009**
(21) Anmeldenummer: 09150754.1
(22) Anmeldetag: 16.01.2009
(51) Int. Cl.: G06K 7/00, G08C 17/02, H04B 1/59, H04L 12/56

(54) **Funkmodul und Verfahren zum Betreiben eines Funkmoduls**

(30) Priorität: 19.01.2008 DE 102008005233
(71) Anmelder: MTU Aero Engines GmbH, 80995 München (DE)
(72) Erfinder: Spitznagel, Jürgen, 81245 München (DE)

(57) **Zusammenfassung**

Die Erfindung betrifft ein Funkmodul (10) mit einer Ausleseeinheit (14), die ausgebildet ist, um Daten von einem passiven Hochfrequenzidentifizierungselement (22) drahtlos auszulesen, wobei sich das passive Hochfrequenzidentifizierungselement (22) in einem Auslesebereich (24) befindet. Weiterhin umfasst das Funkmodul (10) eine Weiterleitungseinheit (16), die ausgebildet ist, um die von der Ausleseeinheit (14) ausgelesenen Daten des Hochfrequenzidentifizierungselements (22) zu erhalten und drahtlos an eine Basiseinheit (18) zu übermitteln, die sich außerhalb des Auslesebereichs (24) befindet. Die Erfindung betrifft weiterhin ein Verfahren zum Betreiben des Funkmoduls (10).

## Beschreibung

Die vorliegende Erfindung betrifft ein Funkmodul und ein Verfahren zum Betreiben eines Funkmoduls. Die Erfindung betrifft weiterhin eine Basiseinheit und ein Verfahren zum Betreiben einer Basiseinheit sowie ein Auslesesystem und ein Verfahren zum Betreiben eines Auslesesystems.

In modernen Lager- und Produktionsabläufen wird oftmals zur eindeutigen Identifizierung von Bauelementen die RFID-Technologie (RFID = Radio Frequency IDentification = Hochfrequenzidentifizierung) verwendet. Sie ermöglicht die automatische Identifikation eines entsprechenden Bauteils, wodurch bauteil- und fertigungsspezifische Informationen während des gesamten Fertigungs- oder Lagerungsprozesses verfügbar gemacht werden können. Die Identifikationsvorrichtung umfasst dabei mindestens ein RFID-Tag. Dieses "Tag" besteht aus einem Anhänger oder Aufkleber, der an den einzelnen Bauelementen angebracht ist und der spezielle Kodierungsdaten zur eindeutigen Identifizierung des Bauelementes enthält. Die Kodierungsdaten können mittels einer Auslesevorrichtung unter Einsatz von hochfrequenten Feldern und Wellen ausgelesen werden, wobei kein direkter Kontakt zwischen der Ausleseeinheit und dem RFID-Tag bestehen muss. Aus diesem Grund eignet sich die RFID-Technologie besonders gut bei unübersichtlichen Anordnungen der mit den RFID-Tags versehenen Objekte, wie sie beispielsweise in großen Lagern oder auch in Produktions- bzw. Werkshallen mit einer Vielzahl von unterschiedlichen, mit Tags markierten Objekten anzutreffen sind.

In der herkömmlichen RFID-Technologie werden verschiedene Arten von Tags eingesetzt. Ein erster Typ von RFID-Tags besteht dabei in den Passiv-Tags (d.h. Passiv-Sendern), die zwar keine eigene Energieversorgung aufweisen und daher kostengünstig sind, die allerdings auch nur eine geringe Sende-Reichweite haben, so dass die Reichweite dieser Passiv-Tags für viele potentielle Anwendungen nicht ausreichend ist. Ein alternativer Tag-Typ besteht in den Aktiv-Tags, die eine eigene Energieversorgung enthalten und damit prinzipiell teurer als Passiv-Tags sind (für viele potentielle Anwendungen allerdings auch zu teuer sind). Diese Aktiv-Tags zeichnen sich durch eine hohe Reichweite bei der Übertragung der Kodierungsdaten aus. Viele potentielle RFID-Anwendungen scheitern aber am Fehlen einer kostengünstigen Lösung für die Übermittlung der Kodierungsdaten über große Sendereichweiten.

Es ist daher Aufgabe der vorliegenden Erfindung ein gattungsgemäßes Funkmodul und ein gattungsgemäßes Verfahren zum Betreiben eines Funkmoduls bereitzustellen, welche die Möglichkeit einer kostengünstigen Implementierung bieten und zugleich eine ausreichende Sendereichweite zur Übertragung der Kodierungsdaten ermöglichen.

Es ist weiterhin Aufgabe der vorliegenden Erfindung eine gattungsgemäße Basiseinheit und ein gattungsgemäßes Verfahren zum Betreiben einer Basiseinheit bereitzustellen, welche die Möglichkeit einer kostengünstigen Implementierung des erfindungsgemäßen Ansatzes bieten und zugleich eine ausreichende Sendereichweite zur Übertragung der Kodierungsdaten ermöglichen.

Es ist weiterhin die Aufgabe der vorliegenden Erfindung ein gattungsgemäßes Auslesesystem und ein gattungsgemäßes Verfahren zum Betreiben eines Auslesesystems bereitzustellen, welche die Möglichkeit einer kostengünstigen Implementierung des erfindungsgemäßen Ansatzes bieten und zugleich eine ausreichende Sendereichweite zur Übertragung der Kodierungsdaten ermöglichen.

Gelöst werden diese Aufgaben durch ein Funkmodul gemäß den Merkmalen des Anspruchs 1, ein Verfahren gemäß den Schritten des Anspruchs 8, eine Basiseinheit gemäß den Merkmalen des Anspruchs 9, ein Verfahren gemäß den Schritten des Anspruchs 11, ein Auslesesystem gemäß den Merkmalen des Anspruchs 12 sowie ein Verfahren gemäß den Schritten des Anspruchs 13.

Vorteilhafte Ausgestaltungen der Erfindung sind in den jeweiligen Unteransprüchen beschrieben.

Ein erfindungsgemäßes Funkmodul umfasst eine Ausleseeinheit, die ausgebildet ist, um Daten von zumindest einem passiven Hochfrequenzidentifizierungselement drahtlos auszulesen, wobei sich das zumindest eine passive Hochfrequenzidentifizierungselement in einem Auslesebereich befindet. Ferner umfasst das erfindungsgemäße Funkmodul auch eine Weiterleitungseinheit, die ausgebildet ist, um die von der Ausleseeinheit ausgelesenen Daten des zumindest einen passiven Hochfrequenzidentifizierungselements zu erhalten und drahtlos an eine Basiseinheit zu übermitteln, die sich außerhalb des Auslesebereichs befindet. Dadurch ist es vorteilhafterweise möglich, die Produkte oder Objekte, deren individuelle Daten zu erfassen sind, mit kostengünstigen Passiv-Tags (d.h. mit passiven Hochfrequenzidentifizierungselementen) zu versehen und in der Nähe der Passiv-Tags das Funkmodul zu positionieren, das eine Passiv-Aktiv-Kopplung durchführt. Hierdurch können die aus den Passiv-Tags ausgelesenen Daten mittels der aktiven Komponente des Funkmoduls (d.h. der Weiterleitungseinheit) über eine große Entfernung an eine Basisstation oder -einheit übertragen werden, in der die Daten der passiven Hochfrequenzidentifizierungselemente ausgewertet werden. Somit lässt sich durch das erfindungsgemäße Funkmodul eine Kombination der Vorteile der Passiv-Tags mit den Vorteilen der Aktiv-Tags realisieren, ohne einen erheblichen Mehraufwand erforderlich zu machen. Zur Nutzung der Vorteile des erfindungsgemäßen Ansatzes ist lediglich das zusätzliche Funkmodul einzusetzen und evtl. eine geringfügige Modifizierung der Auswertung der empfangenen Daten an der Basiseinheit erforderlich.

In einer vorteilhaften Ausgestaltung des erfindungsgemäßen Funkmoduls ist die Ausleseeinheit ausgebildet, um Daten von einer Mehrzahl von passiven Hochfrequenzidentifizierungselementen drahtlos auszulesen, wobei die Weiterleitungseinheit ausgebildet ist, um die Daten der Mehrzahl von passiven Hochfrequenzidentifizierungselementen an die Basiseinheit weiterzuleiten. In dieser Ausgestaltung kann ein Funkmodul zum Auslesen von mehreren passiven Hochfrequenzidentifizierungselementen im Auslesebereich verwendet werden, was die Einsatzfähigkeit solcher Funkmodule erhöht und damit die Kosten für die Ausstattung eines großen zu überwachenden Bereichs (z.B. einer Lager- oder Werkshalle) vorteilhaft senkt.

In einer weiteren vorteilhaften Ausgestaltung des erfindungsgemäßen Funkmoduls ist die Ausleseeinheit und/oder die Weiterleitungseinheit ausgebildet, um die ausgelesenen Daten des passiven Hochfrequenzidentifizierungselements umzukodieren. Dies ermöglicht vorteilhaft eine Anpassung der aus den passiven Hochfrequenzidentifikationselementen ausgelesenen Daten an ein Übertragungsprotokoll zur Basiseinheit und/oder evtl. die Durchführung einer Fehlerschutzkodierung für die Übertragung der ausgelesenen Daten an die Basiseinheit. Auch kann bei der Verwendung von mehreren Funkmodulen in einem Überwachungsbereich zur Unterscheidung dieser Funkmodule eine individuelle Kennung des entsprechenden Funkmoduls den Daten der passiven Hochfrequenzidentifizierungselemente bei der Übertragung an die Basiseinheit hinzugefügt werden.

In einer weiteren vorteilhaften Ausgestaltung des erfindungsgemäßen Funkmoduls ist die Weiterleitungseinheit ausgebildet, um die Daten des zumindest einen passiven Hochfrequenzidentifizierungselementes gebündelt in einem einzelnen Datenpaket drahtlos an die Basiseinheit zu übermitteln. Eine solche Ausgestaltung weist den Vorteil auf, dass ein einfaches und schnelles Übertragungsprotokoll für die Übertragung der ausgelesenen Daten der passiven Hochfrequenzidentifizierungselemente einsetzbar ist, welches auch die Daten von mehreren passiven Hochfrequenzidentifizierungselementen in ein Datenpaket aufnehmen kann. Anderenfalls würde für die einzelne Übertragung der Daten aus den passiven Hochfrequenzidentifizierungselementen zur Basiseinheit ein hoher Signalisierungsaufwand zur Kennzeichnung der Daten der einzelnen passiven Hochfrequenzidentifizierungselemente notwendig, der die Datenübertragung zur Basisstation deutlich langsamer und komplexer machen würde.

In einer weiteren vorteilhaften Ausgestaltung des erfindungsgemäßen Funkmoduls ist die Weiterleitungseinheit ausgebildet, um ein Abfragesignal von der Basiseinheit zu empfangen und ansprechend auf das Abfragesignal ein Auslesen der Daten von sich im Auslesebereich befindlichen passiven Hochfrequenzidentifizierungselementen durch die Ausleseeinheit zu bewirken. Dies ermöglicht vorteilhaft ein interaktives Kommunizieren zwischen der Basiseinheit und dem Funkmodul, so dass ein flexibler und breiter Einsatzbereich des Funkmoduls ermöglicht wird.

In einer weiteren vorteilhaften Ausgestaltung des erfindungsgemäßen Funkmoduls weist dieses ferner eine Energieversorgungseinheit auf, die ausgebildet ist, um eine autonome Energieversorgung der Ausleseeinheit und/oder der Weiterleitungseinheit sicherzustellen. Hierdurch ist es möglich, das Funkmodul auch mobil einzusetzen, beispielsweise an einem Gabelstapler oder einer Palette in der Lager- oder Werkshalle, so dass sich die Einsatzmöglichkeiten der vorliegenden Erfindung vorteilhaft deutlich vergrößern.

In einer weiteren vorteilhaften Ausgestaltung des erfindungsgemäßen Funkmoduls ist die Weiterleitungseinheit ausgebildet, um die Daten des zumindest einen passiven Hochfrequenzidentifizierungselementes an eine Basiseinheit weiterzuleiten, wenn die Basiseinheit einen Abstand von dem Funkmodul aufweist, der zumindest dem Einfachen, vorzugsweise zumindest dem 1,1-Fachen, bevorzugt zumindest dem Doppelten, bevorzugt zumindest dem Dreifachen, bevorzugt zumindest dem Vierfachen, bevorzugt zumindest Fünffachen einer maximalen Entfernung eines passiven Hochfrequenzidentifizierungselementes im Auslesebereich entspricht. Dies ermöglicht eine deutliche Steigerung des Sendebereichs der Weiterleitungseinheit gegenüber dem Auslesebereich der Ausleseeinheit und damit eine vorteilhafte Erweiterung des Einsatzbereichs des Funkmoduls.

Ein erfindungsgemäßes Verfahren zum Betreiben eines Funkmoduls umfasst die folgenden Schritte: a) drahtloses Auslesen von Daten von zumindest einem passiven Hochfrequenzidentifizierungselement, wobei sich das zumindest eine passive Hochfrequenzidentifizierungselement in einem Auslesebereich befindet und b) drahtloses Übermitteln der ausgelesenen Daten des zumindest einen passiven Hochfrequenzidentifizierungselements an eine Basiseinheit, die sich außerhalb des Auslesebereichs befindet. Ein solches Verfahren ermöglicht vorteilhaft die kostengünstige Umsetzung des erfindungsgemäßen Ansatzes, da bei einem solchen Verfahren einfach gestaltete, kostengünstige Passiv-Tags als passive Hochfrequenzidentifizierungselemente an entsprechenden Produkten befestigt werden können. Zugleich ist eine Übermittlung der aus den passiven Hochfrequenzidentifizierungselementen ausgelesenen Daten über eine große Entfernung an die Basiseinheit einfach realisierbar. Somit kommt beim Einsatz des erfindungsgemäßen Verfahrens eine Kombination der vorteilhaften Eigenschaften der Passiv-Tags und der Aktiv-Tags zum Tragen. Durch den erfindungsgemäßen Ansatz wird daher eine deutliche Vergrößerung der potentiellen Anwendungsmöglichkeiten der RFID-Technologie möglich.

Gemäß einer anderen Ausgestaltung der Erfindung kann auch eine Basiseinheit vorgesehen sein, die ausgebildet ist, um ein Datenpaket, das Daten von zumindest einem passiven Hochfrequenzidentifizierungselement enthält, von einer Weiterleitungseinheit eines Funkmoduls drahtlos zu empfangen und aus dem Datenpaket die Daten der einzelnen zugeordneten Hochfrequenzidentifizierungselemente zu extrahieren. Eine solche Basiseinheit bietet vorteilhaft die Möglichkeit, die gebündelten (und damit effizient übertragenen) Daten von einem passiven Hochfrequenzidentifizierungselement auswerten zu können und damit die Vorteile des erfindungsgemäßen Ansatzes ausnützen zu können. Die Basiseinheit bildet dabei im Wesentlichen den Kommunikationspartner des zuvor bereits ausführlich dargestellten Funkmoduls.

In einer weiteren Ausgestaltung der vorliegenden Erfindung ist die Basiseinheit ausgebildet, um ein Abfragesignal an ein Funkmodul auszusenden, um zu bewirken, dass eine Ausleseeinheit des Funkmoduls Daten von einer Mehrzahl von passiven Hochfrequenzidentifizierungselementen ausliest und diese Daten an die Basiseinheit weiterleitet. Durch eine solche Ausgestaltung der Basiseinheit kann vorteilhaft eine effektive Kommunikation zwischen der Basiseinheit und dem Funkmodul hergestellt werden, so dass Abfragen über die in dem Auslesebereich des Funkmoduls befindlichen passiven Hochfrequenzidentifizierungselemente einfach und schnell durchführbar sind.

In einer anderen Ausgestaltung der vorliegenden Erfindung ist ein Verfahren zum Betreiben einer Basiseinheit vorgesehen, das folgende Schritte umfasst: a) drahtloses Empfangen eines Datenpakets, das Daten von zumindest einem passiven Hochfrequenzidentifizierungselement enthält und b) Extrahieren von Daten eines einzelnen zugeordneten Hochfrequenzidentifizierungselementes aus dem Datenpaket. Durch diese Schritte des Verfahrens ist vorteilhaft sichergestellt, dass durch den Einsatz des Funkmoduls eine effiziente, kostengünstige und schnelle Datenübertragung der Daten der passiven Hochfrequenzidentifizierungselemente über eine größere Entfernung zur Basisstation erfolgt und die entsprechende Auswertung der übertragenen Daten in der Basiseinheit erfolgen kann.

In einer weiteren Ausgestaltung der vorliegenden Erfindung ist ein Auslesesystem zum Auslesen von passiven Hochfrequenzidentifizierungselementen vorgesehen, das zumindest ein vorstehend beschriebenes Funkmodul und eine vorstehend beschriebene Basiseinheit umfasst. Obwohl die Vorteile des erfindungsgemäßen Ansatzes bereits durch den alleinigen Einsatz des Funkmoduls oder der Basisstation realisierbar sind, lässt ein Zusammenwirken von einem Funkmodul mit einer Basiseinheit in dem genannten Auslesesystem die Vorteile des erfindungsgemäßen Ansatzes nochmals deutlicher hervortreten, nämlich eine kostengünstige Möglichkeit zum Auslesen von Daten und deren Übertragung über eine große Entfernung zu realisieren.

In entsprechender Weise kann auch gemäß einer weiteren Ausgestaltung der vorliegenden Erfindung ein Verfahren zum Betreiben eines Auslesesystems für passive Hochfrequenzidentifizierungselemente vorgesehen sein, das die folgenden Schritte umfasst: a) drahtloses Auslesen von Daten von zumindest einem passiven Hochfrequenzidentifizierungselement, wobei sich das zumindest eine passive Hochfrequenzidentifizierungselement in einem Auslesebereich befindet; b) drahtloses Übermitteln der ausgelesenen Daten des zumindest einen passiven Hochfrequenzidentifizierungselements in einem Datenpaket an eine Basiseinheit, die sich außerhalb des Auslesebereichs befindet; c) drahtloses Empfangen des Datenpakets in der Basiseinheit, wobei das Datenpaket Daten von zumindest einem passiven Hochfrequenzidentifizierungselement enthält und d) Extrahieren von Daten eines einzelnen zugeordneten Hochfrequenzidentifizierungselements aus dem Datenpaket in der Basiseinheit. Dieses Verfahren zum Betreiben des Auslesesystems ermöglicht analog zur Beschreibung des Auslesesystems eine noch deutlichere Herausstellung der Vorteile des erfindungsgemäßen Ansatzes, obgleich diese bereits durch den Einsatz des Verfahrens zum Betreiben des Funkmoduls und des Verfahrens zum Betreiben der Basiseinheit realisierbar sind.

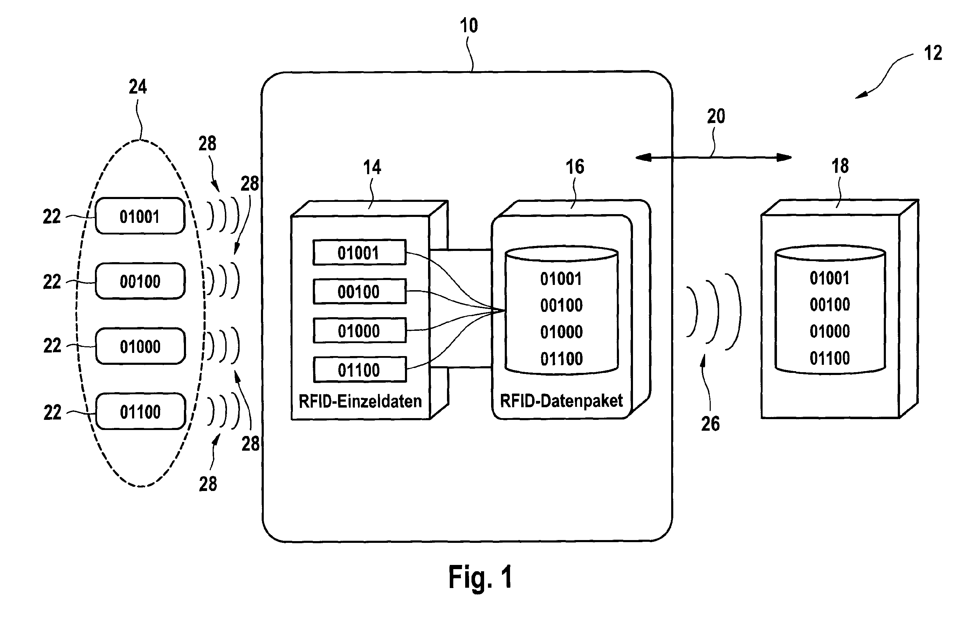

Weitere Vorteile, Merkmale und Einzelheiten der Erfindung ergeben sich aus der nachfolgenden Beschreibung eines zeichnerisch dargestellten Ausführungsbeispiels. Dabei zeigt
- Figur 1: eine schematische Darstellung eines erfindungsgemäßen Funkmoduls in einem Auslesesystem.

Figur 1 zeigt eine schematische Darstellung eines erfindungsgemäßen Funkmoduls 10 in einem Auslesesystem 12. Das Funkmodul 10 umfasst dabei eine Ausleseeinheit 14 und eine Weiterleitungseinheit 16. Die Ausleseeinheit 14, die beispielsweise ein Empfänger mit einem Passiv-Reader bzw. Passiv-Leser sein kann, ist mit der Weiterleitungseinheit 16 verbunden, die im in Figur 1 gezeigten Beispiel ein Sender eines Aktiv-Tags mit großer Sender-Reichweite 20 ist. Das Funkmodul 10 kann daher als RFID-Passiv-Aktiv-Kopplung betrachtet werden, mittels der die Vorteile der Passiv-Tags mit den Vorteilen der Aktiv-Tags verknüpft werden können. Für die beschriebene Funktionalität sollte das Funkmodul 10 jedoch über eine (in Figur 1 nicht dargestellte) autonome Energieversorgungseinheit, zumindest jedoch über einen Energieaufnahmekontakt zur Energieversorgung der Ausleseeinheit 14 und/oder der Weiterleitungseinheit 16 verfügen, um die hohe Sendereichweite 20 zu ermöglichen.

Das Funkmodul 10 sollte möglichst ortsnah an Objekten/Produkten angeordnet sein, die mit Passiv-Tags 22 (d.h. den passiven Hochfrequenzidentifizierungselementen) versehen sind, so dass sich die Objekte/Produkte, die das Passiv-Tag 22 enthalten, möglichst in einem nicht zu stark ausgedehnten Auslesebereich 24 befinden. Die Distanzen innerhalb des Auslesebereichs 24 können dann einfach mit Hilfe der Passiv-Tag-Technologie überbrückt werden. Beispielsweise kann das Funkmodul 10 an einer Palette befestigt sein, auf der die mit den Passiv-Tags 22 versehenen Objekte in einer Lagerhalle gelagert sind. Auch kann in einem anderen Beispiel das Funkmodul 10 an einem Gabelstapler befestigt sein, der die mit den Passiv-Tags 22 versehenen Objekte in einer Werkshalle befördert. Hierdurch lassen sich die Vorteile der Verwendung von Passiv-Tags 22 in Bezug auf eine kostengünstige Realisierungsmöglichkeit bei nicht zu großem Auslesebereich 24 nutzen.

Weiterhin ist zur Bildung des Auslesesystems 12 eine Basiseinheit 18 vorgesehen, die von der Weiterleitungseinheit 16 ausgesandte Signale 26 empfangen und auswerten kann. Die Basiseinheit 18 kann dabei ein Empfänger mit einem Aktiv-Reader bzw. -Leser sein.

Die Funktionsweise des in Figur 1 dargestellten Funkmoduls 10 in dem Auslesesystem 12 lässt sich wie folgt beschreiben. Zunächst befinden sich ein oder mehrere passive Hochfrequenzidentifizierungselemente 22 (in Figur 1 sind 4 derartige Elemente dargestellt) in dem Auslesebereich 24, die sich durch eingespeicherte Kodierungsdaten in Form der dargestellten - hier beispielhaft - 5-stelligen Binärzahlen unterscheiden lassen. Es können jedoch noch weitere Informationen wie beispielsweise eine Information über eine Beschaffenheit des Objekts, an dem das entsprechende passive Hochfrequenzidentifizierungselement 22 befestigt ist, in den Kodierungsdaten einkodiert sein. Diese Kodierungsdaten der passiven Hochfrequenzidentifizierungselemente 22 können dann durch die Ausleseeinheit 14 drahtlos ausgelesen werden. Zum Betrieb der Ausleseeinheit 14 kann diese mit einer Energieversorgungseinheit verbunden sein, die der Ausleseeinheit 14 ermöglicht, ein Auslesesignal an die entsprechenden Hochfrequenzidentifizierungselemente 22 auszusenden, eine entsprechende Antwort 28 zu empfangen und diese auszuwerten.

Wenn mehrere passive Hochfrequenzidentifizierungselemente 22 im Auslesebereich 24 erfasst wurden, können die Kodierungsdaten dieser erfassten Hochfrequenzidentifizierungselemente 22 zu einem Datenpaket (RDIF-Datenpaket) gebündelt werden. Die ausgelesenen (und evtl. gebündelten) Kodierungsdaten werden dann zur Weiterleitungseinheit 16 übertragen. Alternativ kann eine Bündelung der Kodierungsdaten auch erst in der Weiterleitungseinheit 16 erfolgen.

Das Datenpaket, das die ausgelesenen Daten der Hochfrequenzidentifizierungselemente 22 enthält, kann mittels der Weiterleitungseinheit 16 verstärkt und mit einem Signal 26 über eine (gegenüber der Erstreckung des Auslesebereichs 24 deutlich größere) Sendereichweite 20 an die Basiseinheit 18 übertragen werden. Hierzu sollte die Weiterleitungseinheit ebenfalls mit einer Energieversorgungseinheit verbunden sein, um die Übertragung über die große Sendereichweite 20 zu ermöglichen. In der Basiseinheit 18 kann anschließend das empfangene Datenpaket derart dekodiert werden, dass die Basiseinheit 18 aus den dekodierten Kodierungsdaten Informationen über das Vorliegen der entsprechenden zugeordneten Hochfrequenzidentifikationselemente 22 im Auslesebereich 24 des Funkmoduls 10 erhält.

Für den Fall, dass ein ausgedehnter Überwachungsbereich in einer Lager- oder Werkshalle durch mehrere Funkmodule 10 auf das Vorliegen von entsprechenden Hochfrequenzidentifizierungselementen 22 überwacht werden soll, kann auch zur Unterscheidung des von jedem Funkmodul 10 ausgesandten Signals 26 dieses zusätzlich durch eine entsprechende Funkmodul-spezifische Kennung kodiert werden. Die Basiseinheit 18 kann somit an Hand der ausgewerteten Daten aus dem Signal 26 eindeutig eine Information erhalten, von welchem Funkmodul 10 die Kodierungsdaten eines entsprechenden passiven Hochfrequenzidentifizierungselementes gesendet wurden.

Der vorgeschlagene Ansatz bietet somit eine Kombination der Systeme der Passiv- und Aktiv-Tags. Produkte werden mit kostengünstigen Passiv-Tags bestückt und ein zugehöriger Empfänger wird ortsnah angebracht. Die einzelnen eingelesenen Signale werden gebündelt und als Datenpaket in ein Aktiv-Tag (in der Form der Weiterleitungseinheit des Funkmoduls) eingespielt. Das Aktiv-Tag mit einer großen Reichweite sendet dieses Datenpaket an den zugehörigen ortsfernen Empfänger (d.h. die Basiseinheit). Dies bedeutet, dass Massenprodukte mit kostengünstigen Passiv-Tags ausgestattet werden und deren RFID-Daten über die Erfindung der Passiv-Aktiv-Kopplung erstmalig an ortsfeme Empfänger übermittelt werden können. Die Erfindung eröffnet dadurch eine Vielzahl neuer RFID-Anwendungen.

## Patentansprüche

1. Funkmodul (10) mit folgenden Merkmalen:
- einer Ausleseeinheit (14), die ausgebildet ist, um Daten von zumindest einem passiven Hochfrequenzidentifizierungselement (22) drahtlos auszulesen, wobei sich das zumindest eine passive Hochfrequenzidentifizierungselement (22) in einem Auslesebereich (24) befindet; und
- einer Weiterleitungseinheit (16), die ausgebildet ist, um die von der Ausleseeinheit (14) ausgelesenen Daten des zumindest einen passiven Hochfrequenzidentifizierungselements (22) zu erhalten und drahtlos an eine Basiseinheit (18) zu übermitteln, die sich außerhalb des Auslesebereichs (24) befindet.

2. Funkmodul (10) gemäß Anspruch 1, **dadurch gekennzeichnet, dass** die Ausleseeinheit (14) ausgebildet ist, um Daten von einer Mehrzahl von passiven Hochfrequenzidentifizierungselementen (22) drahtlos auszulesen und wobei die Weiterleitungseinheit (16) ausgebildet ist, um die Daten der Mehrzahl von passiven Hochfrequenzidentifizierungselementen (22) an die Basiseinheit (18) weiterzuleiten.

3. Funkmodul (10) gemäß einem der vorhergehenden Ansprüche, **dadurch gekennzeichnet, dass** die Ausleseeinheit (14) und / oder die Weiterleitungseinheit (16) ausgebildet ist, um die ausgelesenen Daten des passiven Hochfrequenzidentifizierungselements (22) umzukodieren.

4. Funkmodul (10) gemäß einem der vorhergehenden Ansprüche, **dadurch gekennzeichnet, dass** die Weiterleitungseinheit (16) ausgebildet ist, um die Daten des zumindest einen passiven Hochfrequenzidentifizierungselementes (22) gebündelt in einem einzelnen Datenpaket drahtlos an die Basiseinheit (18) zu übermitteln.

5. Funkmodul (10) gemäß einem der vorhergehenden Ansprüche, **dadurch gekennzeichnet, dass** die Weiterleitungseinheit (16) ausgebildet ist, um ein Abfragesignal von der Basiseinheit (18) zu empfangen und ansprechend auf das Abfragesignal ein Auslesen der Daten von sich im Auslesebereich (24) befindlichen passiven Hochfrequenzidentifizierungselementen (22) durch die Ausleseeinheit (14) zu bewirken.

6. Funkmodul (10) gemäß einem der vorhergehenden Ansprüche, **dadurch gekennzeichnet, dass** es ferner eine Energieversorgungseinheit aufweist, die ausgebildet ist, um eine autonome Energieversorgung der Ausleseeinheit (14) und / oder der Weiterleitungseinheit (16) sicherzustellen.

7. Funkmodul (10) gemäß einem der vorhergehenden Ansprüche, **dadurch gekennzeichnet, dass** die Weiterleitungseinheit (16) ausgebildet ist, um die Daten des zumindest einen passiven Hochfrequenzidentifizierungselementes (22) an eine Basiseinheit (18) weiterzuleiten, wenn die Basiseinheit (18) einen Abstand von dem Funkmodul (10) aufweist, der zumindest dem Einfachen, insbesondere zumindest dem Fünffachen, einer maximalen Entfernung eines passiven Hochfrequenzidentifizierungselementes (22) im Auslesebereich (24) entspricht.

8. Verfahren zum Betreiben eines Funkmoduls (10), das folgende Schritte umfasst:
a) drahtloses Auslesen von Daten von zumindest einem passiven Hochfrequenzidentifizierungselement (22), wobei sich das zumindest eine passive Hochfrequenzidentifizierungselement (22) in einem Auslesebereich (24) befindet; und
b) drahtloses Übermitteln der ausgelesenen Daten des zumindest einen passiven Hochfrequenzidentifizierungselements (22) an eine Basiseinheit (18), die sich außerhalb des Auslesebereichs (24) befindet.

9. Basiseinheit (18), die ausgebildet ist, um ein Datenpaket, das Daten von zumindest einem passiven Hochfrequenzidentifizierungselement (22) enthält, von einer (aktiven) Weiterleitungseinheit (16) eines Funkmoduls (10) drahtlos zu empfangen und aus dem Datenpaket die Daten der einzelnen zugeordneten Hochfrequenzidentifizierungselemente (22) zu extrahieren.

10. Basiseinheit (18) gemäß Anspruch 9, **dadurch gekennzeichnet, dass** sie ausgebildet ist, um ein Abfragesignal an das Funkmodul (10) auszusenden, um zu bewirken, dass eine Ausleseeinheit (14) des Funkmoduls (10) Daten von einer Mehrzahl von passiven Hochfrequenzidentifizierungselementen (22) ausliest und diese Daten an die Basiseinheit (18) weiterleitet.

11. Verfahren zum Betreiben einer Basiseinheit (18), das folgende Schritte umfasst:
a) drahtloses Empfangen eines Datenpakets, das Daten von zumindest einem passiven Hochfrequenzidentifizierungselement (22) enthält; und
b) Extrahieren von Daten eines einzelnen zugeordneten Hochfrequenzidentifizierungselementes (22) aus dem Datenpaket.

12. Auslesesystem (12) zum Auslesen von passiven Hochfrequenzidentifizierungselementen (22) mit folgenden Merkmalen:
- zumindest einem Funkmodul (10) gemäß einem der Ansprüche 1 bis 7;
- einer Basiseinheit (18) gemäß einem der Ansprüche 9 oder 10.

13. Verfahren zum Betreiben eines Auslesesystems (12) für passive Hochfrequenzidentifizierungselemente (22), das folgende Schritte umfasst:
a) drahtloses Auslesen von Daten von zumindest einem passiven Hochfrequenzidentifizierungselement (22), wobei sich das zumindest eine passive Hochfrequenzidentifizierungselement (22) in einem Auslesebereich (24) befindet;
b) drahtloses Übermitteln der ausgelesenen Daten des zumindest einen passiven Hochfrequenzidentifizierungselements (22) in einem Datenpaket an eine Basiseinheit (18), die sich außerhalb des Auslesebereichs (24) befindet;
c) drahtloses Empfangen des Datenpakets in der Basiseinheit (18), wobei das Datenpaket Daten von zumindest einem passiven Hochfrequenzidentifizierungselement (22) enthält; und
d) Extrahieren von Daten eines einzelnen zugeordneten Hochfrequenzidentifizierungselements (22) aus dem Datenpaket in der Basiseinheit (18).
